# EUROPÄISCHE PATENTANMELDUNG

(11) **EP 1 876 071 A2**
(43) Veröffentlichungstag der Anmeldung: **09.01.2008**
(21) Anmeldenummer: 07011840.1
(22) Anmeldetag: 16.06.2007
(51) Int. Cl.: B60R 21/239

(54) **Aufblasbare Fahrzeuginsassenschutzeinrichtung**

(30) Priorität: 08.07.2006 DE 102006031664
(71) Anmelder: Dr.Ing.h.c. F. Porsche Aktiengesellschaft, 70435 Stuttgart (DE)
(72) Erfinder: De Lira Morozini, Adriano, 71229 Leonberg (DE)

(57) **Zusammenfassung**

Die vorliegende Erfindung betrifft eine aufblasbare Insassenschutzeinrichtung (1), insbesondere einen Seitenairbag, mit einem Gassack (5), der als Mittel zur Druckentlastung zumindest eine Gasaustrittsöffnung (6) aufweist. Erfindungswesentlich ist dabei, dass die zumindest eine Gasaustrittöffnung (6) durch eine ballonartig aufblasbare Membran (7) verschlossen ist.

## Beschreibung

Die Erfindung betrifft eine aufblasbare Fahrzeuginsassenschutzeinrichtung, insbesondere einen Seitenairbag, gemäß dem Oberbegriff des Anspruchs 1.

Eine bekannte Art einer aufblasbaren Fahrzeuginsassenschutzeinrichtung wird üblicherweise als Airbag bezeichnet. Prinzipiell werden diese Airbags in Sekundenbruchteilen nach dem Zusammenstoß aufgeblasen und entleeren sich nach dem Zusammenstoß auch wieder relativ schnell. Dies ist bei üblichen Zusammenstößen, also beispielsweise bei einem Frontalaufprall, auch wünschenswert, wogegen bei einem Unfall mit einem Überschlag ein schnelles Entleeren des Airbags und damit ein Verlust dessen Schutzwirkung unmittelbar nach dem Unfall unbedingt vermieden werden muss. Insbesondere bei einem Überschlag des Kraftfahrzeuges, welcher gegebenenfalls mehrere Sekunden andauern kann, sollte der Airbag über die gesamte Unfalldauer den Fahrzeuginsassen zuverlässig schützen. Hierzu sind aus dem Stand der Technik Systeme bekannt, welche eine Entleerung des Airbags lediglich zeitverzögert zulassen oder mehrere Gasgeneratoren aufweisen, welche zeitversetzt zueinander Gas in den Airbag leiten.

Aus der DE 197 19 151 A1 ist eine aufblasbare Fahrzeuginsassenschutzvorrichtung bekannt, welche erste und zweite aufblasbare Strukturen umfasst. Die erste aufblasbare Struktur besitzt eine aufgeblasene Anordnung zwischen Thorax beziehungsweise Rumpf des Insassen und einem Seitenteil des Fahrzeugs. Die zweite aufblasbare Struktur weist eine aufgeblasene Anordnung zwischen dem Kopf des Insassen und dem Seitenteil des Fahrzeugs auf. Ein zwischen der ersten und der zweiten aufblasbaren Struktur gelegenes Ventil ermöglicht eine Druckerhöhung in der zweiten aufblasbaren Struktur im Vergleich zur ersten aufblasbaren Struktur, entsprechend auf einen Kontakt hin des Rumpfes des Insassen mit der ersten aufblasbaren Struktur und zwar vor einem nachfolgenden Eingriff oder Kontakt des Kopfes des Insassen mit der zweiten aufblasbaren Struktur. Dies soll den Fahrzeuginsassen insbesondere bei einem sogenannten Roll-over besser schützen.

Aus der DE 102 21 659 A1 ist ein Airbagmodul bekannt, welches einen Gassack, eine Gaszuführeinrichtung, einen Gasgenerator und Mittel zur Druckentlastung des aufgeblasenen Gassacks umfasst, die nach einer vorbestimmten Zeitdauer wirksam werden und durch das Auslösen des Gasgenerators beziehungsweise ein Auslösesignal für den Gasgenerator iniziiert sind. Die Mittel zur Druckentlastung schaffen somit einen Druckausgleich mit der Umgebung und zwar nach einer vordefinierten Zeitspanne.

Aus der DE 10 2004 052 462 A1 ist ein Airbagsystem mit einem Airbagkörper, einer Gasgeneratoreinheit und einer Sensoreinheit bekannt, wobei die Sensoreinheit mit einem ersten Sensor den Aufprall des Fahrzeugs und mit einem zweiten Sensor den Überschlag des Fahrzeugs detektiert. Wenn durch den ersten Sensor ein Aufprall des Fahrzeugs detektiert wird, wird der erste Gasgenerator betätigt, so dass dem Airbagkörper Gas zugeführt wird. Wenn anschließend durch den zweiten Sensor ein Überschlag des Fahrzeugs detektiert wird, werden sowohl der erste als auch der zweite Gasgenerator betätigt, wodurch der Innendruck des Airbagkörpers einen zweiten Druck, der höher ist als der erste Druck, erreicht.

Weitere Fahrzeuginsassenschutzeinrichtungen sind beispielsweise aus der US 6,932,386 B2, aus der US 6,227,562 B1 und der US 6,447,006 B1 bekannt.

Die vorliegende Erfindung beschäftigt sich mit dem Problem, für eine aufblasbare Fahrzeuginsassenschutzeinrichtung der gattungsgemäßen Art eine verbesserte Ausführungsform anzugeben, welche einen Fahrzeuginsassen auch bei einem Überschlag des Fahrzeuges zuverlässig schützt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer aufblasbaren Fahrzeuginsassenschutzeinrichtung mit einem Gassack, eine Gasaustrittsöffnung zur Entleerung beziehungsweise Druckentlastung des Gassacks durch eine ballonartig aufblasbare Membran zu verschließen. Die Idee ist hierbei, ein zu schnelles Entweichen des Gases aus dem Gassack zu vermeiden, und dadurch die Schutzwirkung des Airbags länger erhalten zu können. Dies ist insbesondere bei einem Unfall mit einem Fahrzeugüberschlag von entscheidender Bedeutung, da hierbei, anders als bei einem Frontalaufprall, ein mehrfaches Auftreffen des Fahrzeuginsassen auf den Airbag auftreten kann und dieser deshalb seine Schutzwirkung deutlich länger aufrechterhalten muss. Bei einem Überschlag des Fahrzeugs wird somit die aufblasbare Fahrzeuginsassenschutzeinrichtung aufgeblasen, wobei ab Erreichen eines vordefinierten Drucks sich auch die die Gasaustrittsöffnung verschließende Membran ballonartig aufbläst. Wird kein Gas mehr dem Airbag zugeführt, so entweicht dieses langsam durch die Hülle des Gassackes, wobei der Druck durch die ballonartig aufgeblasene Membran beziehungsweise ein sich Zusammenziehen derselben noch einige Zeit aufrechterhalten wird und dadurch die Schutzwirkung des Airbags zeitlich verlängert.

Zweckmäßig ist die Membran entlang eines Öffnungsrandes der Gasaustrittsöffnung mit dem Gassack vernäht und/oder verklebt. Eine derartige Verbindung zwischen Gassack und Membran gewährleistet eine zuverlässige Verbindung zwischen den beiden genannten Bauteilen, wobei eine Verklebung darüber hinaus eine gasdichte Verbindung garantiert.

Bei einer vorteilhaften Ausführungsform der erfindungsgemäßen Lösung ist die zumindest eine Membran auf einer mit einem Fahrzeuginsassen bei aufgeblasenem Gassack üblicherweise nicht in Kontakt kommenden Seite des Gassacks angeordnet. Dies gewährleistet, dass bei einem Unfall, bei welchem die Fahrzeuginsassenschutzeinrichtung aktiviert wird, die Fahrzeuginsassen üblicherweise nur mit dem Gassack nicht jedoch mit der ballonartig aufblasbaren Membran in Kontakt kommen, sodass eine Verletzung des Fahrzeuginsassen durch einen Kontakt, beispielsweise mit der Membran oder mit der Gasaustrittsöffnung vermieden werden kann.

Bei einer weiteren vorteilhaften Ausführungsform der erfindungsgemäßen Lösung weist die Membran eine Sollbruchstelle auf, welche bei einem vordefinierten Druck und/oder nach einer vordefinierten Zeit bricht und dadurch die Gasaustrittsöffnung öffnet. Eine derartige Sollbruchstelle bewirkt, dass der Gassack nicht ungewollt mit einem zu hohen Druck beaufschlagt werden kann und dadurch seine Schutzwirkung eventuell beeinträchtigt wird. Hierdurch können insbesondere Verletzungen des Fahrzeuginsassen beim in Kontakt treten desselben mit dem Airbag zuverlässig vermieden werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Anordnung einer erfindungsgemäßen Fahrzeuginsassenschutzeinrichtung in einem Kraftfahrzeug,
- Fig. 2: eine aktivierte Fahrzeuginsassenschutzeinrichtung,
- Fig. 3a - 3c: unterschiedliche Stadien der Aktivierung der Fahrzeuginsassenschutzeinrichtung.

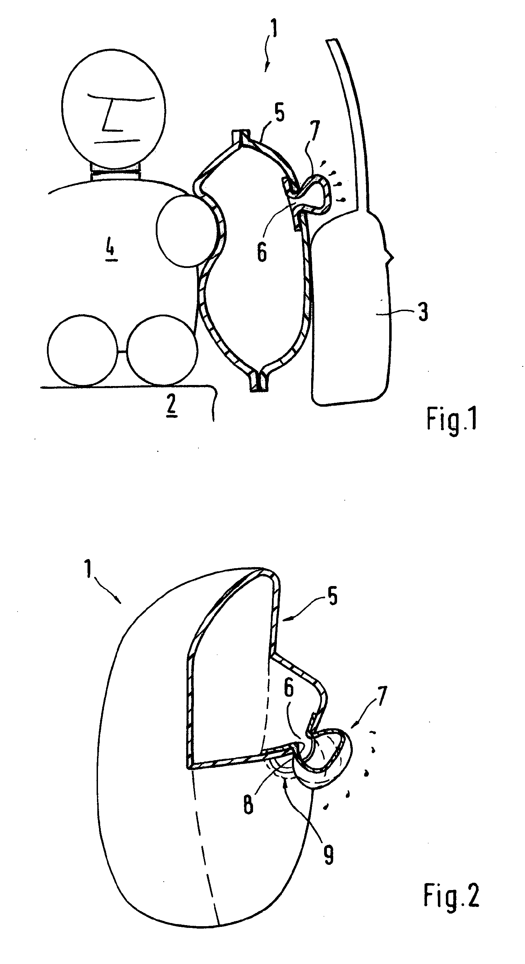

Entsprechend Fig. 1 ist eine erfindungsgemäße Fahrzeuginsassenschutzeinrichtung 1 in einem nicht vollständig gezeigten Kraftfahrzeug zwischen einem Fahrzeugsitz 2 und einer Seitenwand 3, insbesondere einer Seitentür, angeordnet. Die Fahrzeuginsassenschutzeinrichtung 1, kurz auch als Airbag bezeichnet, schützt einen Fahrzeuginsassen 4 bei einem seitlichen Aufprall auf das Kraftfahrzeug. Die Fahrzeuginsassenschutzeinrichtung 1 ist dabei aufblasbar und in Fig. 1 in ihrem aufgeblasenen Zustand gezeigt, wobei sie einerseits mit der Seitenwand 3 und andererseits mit dem Fahrzeuginsassen 4 in Kontakt tritt. Die Fahrzeuginsassenschutzeinrichtung 1 weist einen Gassack 5 auf, der als Mittel zur Druckentlastung zumindest eine Gasaustrittsöffnung 6 besitzt. Diese Gasaustrittsöffnung 6 ist erfindungsgemäß durch eine ballonartig aufblasbare Membran 7 verschlossen.

Durch die ballonartig aufblasbare Membran 7 verschlossene Gasaustrittsöffnung 6 bewirkt bei aktivierter Fahrzeuginsassenschutzeinrichtung 1, das in den Gassack 5 gepresstes Gas nicht unmittelbar durch die Gasaustrittsöffnung 6 entweichen kann, sondern in komprimierter Form in der aufgeblasenen Membran 7 gespeichert und von dieser zurück in ein Inneres des Gassacks 5 gepresst werden kann, sodass ein Zustand, in welchem der Gassack 5 aufgeblasen ist, über längere Zeit aufrecht erhalten werden kann. Dies ist insbesondere bei einem Fahrzeugüberschlag von entscheidender Bedeutung, da es hierbei zu einem mehrfachen Auftreffen des Fahrzeuginsassen 4 auf den Gassack 5 in Folge der Überrollbewegung kommen kann und dadurch ein zu schnelles Entweichen des Gases aus dem Gassack 5 durch die Gasaustrittsöffnung 6 unbedingt vermieden werden muss.

Wie der Fig. 1 weiter zu entnehmen ist, ist die Membran 7 auf einer, mit dem Fahrzeuginsassen 4 bei aufgeblasenem Gassack 5 üblicherweise nicht in Kontakt kommenden Seite des Gassackes 5 angeordnet, so dass der Fahrzeuginsasse 4 bei einem Aufprall beziehungsweise bei einem Unfall nicht durch die Membran 7 verletzt beziehungsweise beeinträchtigt werden kann. Mit anderen Worten ausgedrückt bedeutet dies, dass die durch die Membran 7 verschlossene Gasaustrittsöffnung 6 auf einer dem Fahrzeuginsassen 4 gegenüberliegenden Seite des Gassacks 5 angeordnet ist. Generell ist dabei gemäß der Fig. 1 der Übersicht halber nur eine Membran 7 sowie lediglich eine Gasaustrittsöffnung 6 dargestellt, wobei denkbar ist, dass die erfindungsgemäße Fahrzeuginsassenschutzeinrichtung 1 mehrere, jeweils einer ballonartig aufblasbaren Membran 7 verschlossene Gasaustrittsöffnungen 6 aufweisen kann.

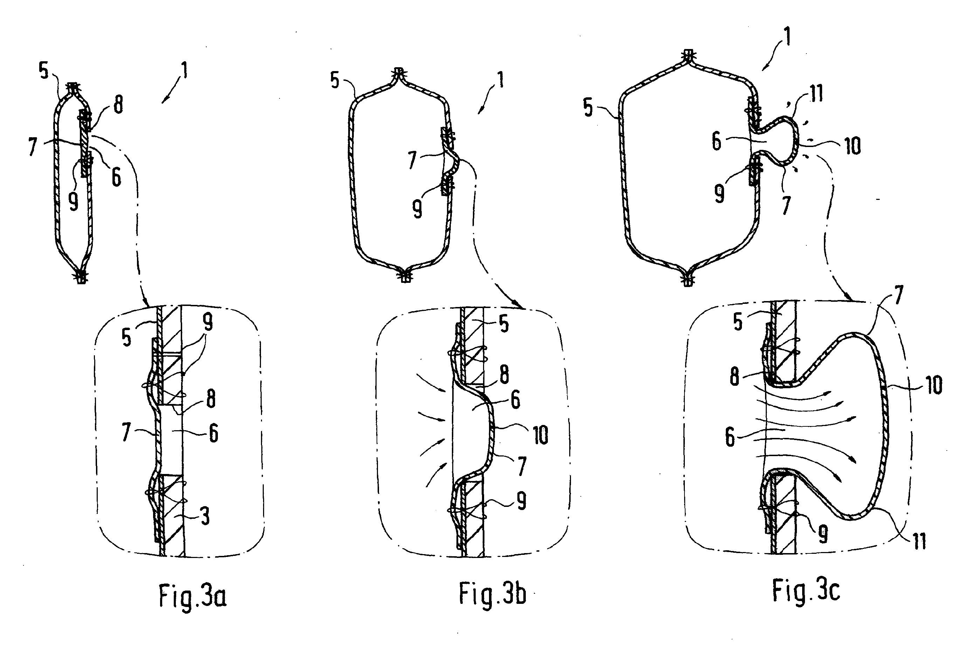

In Fig. 2 ist ein im Bereich der Gasaustrittöffnung 6 geschnittener Gassack 5 dargestellt, wobei erkennbar ist, dass die Membran 7 die Gasaustrittöffnung 6 allseitig überdeckend von innen am Gassack 5 angeordnet ist. Dies ist ebenso der Fig. 3a eindeutig entnehmbar. Darüber hinaus kann der Fig. 2 sowie den Fig. 3a bis 3c entnommen werden, dass die Membran 7 entlang eines Öffnungsrandes 8 der Gasaustrittsöffnung 6 mit dem Gassack 5 vernäht ist, wobei auch denkbar ist, dass zusätzlich oder alternativ die Membran 7 mit dem Gassack 5 verklebt ist. Dabei ist gemäß den Fig. 2 und 3a bis 3c eine Naht mit dem Bezugszeichen 9 gekennzeichnet. Ein Verbindungsbereich zwischen der Membran 7 und dem Gassack 5 ist dabei vorzugsweise gasdicht ausgeführt, wobei vorgesehen sein kann, dass im Überdeckungsbereich zwischen der Membran 7 und dem Gassack 5 zwischen den beiden Silikon eingespritzt ist, wodurch ein Austritt von Gas zusätzlich erschwert wird. Prinzipiell kann der Gassack 5 aus einem Nylongewebe hergestellt sein, welches optional mit einer Silikonschicht beschichtet ist.

Fig. 3a zeigt den Gassack 5 in einem nicht vollständig aufgeblasenen Zustand, bei welchem die Membran 7 innerhalb einer Außenkontur des Gassackes 5 angeordnet ist. Bei einem weiteren Aufblasen des Gassacks 5 drückt sich die Membran 7 gemäß der Fig. 3b langsam nach außen durch die Gasaustrittsöffnung 6 und bläst sich im weiteren ballonartig, wie in Fig. 3c dargestellt, auf. In diesem ballonartig aufgeblasenen Zustand tritt die Membran 7 deutlich über die Außenkontur des Gassackes 5 hinaus und umschließt ein komprimiertes Gasvolumen, welches bei Bedarf zurück in den Gassack 5 strömen kann. Durch die Membran 7 wird ein zu schneller Druckverlust innerhalb des Gassackes 5 unterbunden.

Prinzipiell kann die Membran 7 aus einem Elastomer, also einem elastischen Kunststoff, ausgebildet sein. Die hohe Elastizität der Elastomere beruht auf einer lediglich punktuellen Verbindung der Makromoleküle der Elastomere, welche ein weitmaschiges, räumliches Netz bilden. Elastomere können sich dadurch bei Zug- und Druckbelastungen elastisch verformen und finden danach in ihre ursprüngliche, unverformte Gestalt zurück.

Denkbar ist auch, dass die Membran 7 eine Sollbruchstelle 10 aufweist, welche bei einem vordefinierten Druck und/oder nach einer vordefinierten Zeit bricht und dadurch die Gasaustrittsöffnung 6 öffnet und eine Verbindung mit der Umgebung schafft. Eine derartige Sollbruchstelle 10 verhindert einen zu hohen Druck innerhalb des Gassacks 5, welcher eine Schutzwirkung der Fahrzeuginsassenschutzeinrichtung 1 beeinträchtigt. Zusätzlich oder alternativ kann die Membran 7 auch einen Gasauslass 11 aufweisen, welcher deutlich kleiner ist als die Gasaustrittsöffnung 6 des Gassacks 5 und dadurch ein kontrolliertes Ablassen eines im Gassack 5 beziehungsweise in der Membran 7 herrschenden Drucks ermöglicht.

Zusammenfassend lassen sich die wesentlichen Merkmale der erfindungsgemäßen Lösung wie folgt charakterisieren.

Die Erfindung schlägt vor, eine üblicherweise an einem Gassack 5 einer aufblasbaren Fahrzeuginsassenschutzeinrichtung 1 vorgesehene Gasaustrittsöffnung 6 durch eine ballonartig aufblasbare Membran 7 zu verschließen. Eine derartige Membran 7 verhindert ein zu schnelles Ausströmen von im Gassack 5 vorhandenem Gas, wodurch der Gassack 5 über einen längeren Zeitraum seine Schutzwirkung aufrecht erhalten kann, was insbesondere bei einem Fahrzeugüberschlag von großem Vorteil ist, da hierbei ein Fahrzeuginsasse 4 mehrmals auf den Gassack 5 der Fahrzeuginsassenschutzeinrichtung 1 treffen kann und dadurch mehrmals vor einem direkten Kontakt mit harten Fahrzeugkomponenten geschützt werden muss.

## Patentansprüche

1. Aufblasbare Fahrzeuginsassenschutzeinrichtung (1), insbesondere ein Seitenairbag, mit einem Gassack (5), der als Mittel zur Druckentlastung zumindest eine Gasaustrittsöffnung (6) aufweist, **dadurch gekennzeichnet, dass** die zumindest eine Gasaustrittsöffnung (6) durch eine ballonartig aufblasbare Membran (7) verschlossen ist.

2. Fahrzeuginsassenschutzeinrichtung nach Anspruch 1, **dadurch gekennzeichnet, dass** die Membran (7) die Gasaustrittsöffnung (6) allseitig überdeckend von innen am Gassack (5) angeordnet ist.

3. Fahrzeuginsassenschutzeinrichtung nach Anspruch 1 oder 2, **dadurch gekennzeichnet, dass** die Membran (7) entlang eines Öffnungsrandes (8) der Gasaustrittsöffnung (6) mit dem Gassack (5) vernäht und/oder verklebt ist.

4. Fahrzeuginsassenschutzeinrichtung nach einem der Ansprüche 1 bis 3, **dadurch gekennzeichnet, dass** ein Verbindungsbereich zwischen der Membran (7) und dem Gassack (5) gasdicht ausgeführt ist.

5. Fahrzeuginsassenschutzeinrichtung nach einem der Ansprüche 1 bis 4, **dadurch gekennzeichnet, dass** die Membran (7) aus einem Elastomer ausgebildet ist.

6. Fahrzeuginsassenschutzeinrichtung nach einem der Ansprüche 1 bis 5, **dadurch gekennzeichnet, dass** die zumindest eine Membran (7) auf einer mit einem Fahrzeuginsassen (4) bei aufgeblasenem Gassack (5) üblicherweise nicht in Kontakt kommenden Seite des Gassacks (5) angeordnet ist.

7. Fahrzeuginsassenschutzeinrichtung nach einem der Ansprüche 1 bis 6, **dadurch gekennzeichnet, dass** die Membran (7) eine Sollbruchstelle (10) aufweist, welche bei einem vordefinierten Druck und/oder nach einer vordefinierten Zeit bricht und **dadurch** die Gasaustrittsöffnung (6) öffnet.

8. Fahrzeuginsassenschutzeinrichtung nach einem der Ansprüche 1 bis 7, **dadurch gekennzeichnet, dass** die Membran (7) einen Gasauslass (11) aufweist, der kleiner ist als die Gasaustrittsöffnung (6) des Gassacks (5).
